# FASCICULE DE BREVET EUROPEEN

(11) **EP 1 358 748 B1**
(45) Date de publication et mention de la délivrance du brevet: **04.10.2006**
(21) Numéro de dépôt: 02700411.8
(22) Date de dépôt: 25.01.2002
(51) Int. Cl.: H04L 29/06

(54) **DISPOSITIF ET PROCEDE D'APPAIRAGE AUTOMATIQUE SECURISE DES APPAREILS D'UN RESEAU RADIOFREQUENCE**
VORRICHTUNG UND VERFAHREN ZUR AUTOMATISCHEN SICHEREN PAARBILDUNG ZWISCHEN GERÄTEN EINES FUNKFREQUENZNETZES
DEVICE AND METHOD FOR AUTOMATIC AND SECURE PAIRING OF APPLIANCES IN A RADIOFREQUENCY NETWORK

(30) Priorité: 26.01.2001 FR 0101097
(43) Date de publication de la demande: 05.11.2003
(73) Titulaire: GEMPLUS, 13881 Gémenos Cedex (FR)
(72) Inventeur: LAPORTE, Frédéric, F-13008 MARSEILLE (FR); HAUSER, Jean-Luc, 13008 MARSEILLE (FR); ROSE, Murielle, 83390 CUERS (FR)
(86) Numéro de dépôt international: PCT/FR2002/000305
(87) Numéro de publication internationale: WO 2002/060151

(56) Documents cités:
- EP-A- 1 024 626
- WO-A-00/51293
- US-A- 5 887 063

## Description

L'invention concerne les réseaux radiofréquence dans lesquels les appareils d'un réseau communiquent entre eux par des liaisons radiofréquence et, plus particulièrement dans de tels réseaux, un dispositif et un procédé pour appairer entre eux de manière sécurisée et automatique les appareils du réseau.

Il est connu de réaliser des liaisons radiofréquence entre des appareils électroniques tels qu'un ordinateur personnel, une imprimante, un combiné téléphonique portable ou fixe, etc, en mettant en oeuvre, par exemple, les spécifications d'un réseau appelé "BLUETOOTH" qui sont définies dans les documents ETS 300-328 et ETS 300-339.

Dans un tel réseau BLUETOOTH, les appareils communiquent en "clair" de manière non sécurisée ou à l'aide de messages cryptés par des algorithmes symétriques à clé privée.

Cette seconde solution permet une communication sécurisée mais il se pose alors le problème de l'échange initial de la clé. Le standard BLUETOOTH propose un échange en "clair" ou l'utilisation d'un câble pour connecter les deux appareils durant cette phase d'échange de clés. Ces solutions ne sont pas satisfaisantes tant sur le plan pratique que sur celui de la sécurité.

Pour pallier ce problème, il a été proposé de rentrer manuellement la clé dans chacun des deux appareils à connecter.

Cette procédure peut s'avérer fastidieuse dans la mesure où il faut saisir deux fois ce code sur un

Par ailleurs, certains appareils du réseau peuvent ne pas avoir de clavier, par exemple une oreillette d'écoute d'un appareil portable téléphonique, de sorte que l'on est amené à enregistrer ce code de manière permanente ou presque dans l'appareil sans clavier.

Ceci conduit à permettre à tout porteur de l'appareil de s'introduire dans le réseau sans avoir à s'authentifier en tant que personne.

Il est aussi proposé de connecter les deux appareils par l'intermédiaire d'une liaison filaire de manière à échanger en toute sécurité les clés de session pour assurer ensuite l'authentification et le cryptage.

L'inconvénient de cette solution réside dans le fait que chaque appareil doit être équipé d'une prise spéciale qui sera différente d'un appareil à l'autre.

Dans la demande de brevet français N° 2812509 déposée le 26 juillet 2000 par la demanderesse, il est proposé un procédé de reconnaissance sécurisée entre deux appareils d'un réseau radiofréquence qui comprend les étapes suivantes consistant à :
(a) mettre en marche les deux appareils,
(b) sélectionner l'un des deux appareils comme appareil-maître et l'autre comme appareil-esclave,
(c) approcher les deux appareils à proximité immédiate l'un de l'autre,
(d) lancer sur l'appareil-maître une procédure automatique de reconnaissance sécurisée consistant à :
   (d1) émettre des signaux selon un diagramme de rayonnement tel que les signaux ne soient reçus que par l'appareil-esclave,
   (d2) lancer une procédure classique de connexion au réseau radiofréquence et, en cas de succès de connexion au réseau radiofréquence,
   (d3) générer une clé de reconnaissance en vue de sécuriser les échanges ultérieurs,
   (d4) émettre à nouveau des signaux selon le diagramme de rayonnement habituel, et
(e) éloigner les deux appareils l'un de l'autre pour un fonctionnement à distance normale.

Les étapes (d1) et (d2) sont répétées en cas d'échec de l'étape (d2) de connexion radiofréquence. Les étapes (d1) et (d2) sont répétées au moins une fois avec un diagramme de rayonnement de portée plus grande.

Le procédé qui vient d'être décrit est satisfaisant du point de vue de la sécurité qu'il apporte mais il implique de modifier les appareils du réseau pour que leur diagramme de rayonnement soit modifiable afin que leur portée puisse être réduite à quelques centimètres pendant leur reconnaissance mutuelle.

Le document EP-A-1024626 décrit une procédure et un dispositif qui fait interagir deux appareils radiofréquence

Un but de la présente invention est donc de réaliser un dispositif dédié à l'appairage sécurisé des appareils d'un réseau radiofréquence qui ne nécessite pas de modification des appareils du réseau radiofréquence.

Par ailleurs, les procédés de l'art antérieur impliquent, de la part de l'utilisateur des appareils du réseau radiofréquence, la connaissance de codes et la manipulation de touches sur les appareils pour entrer ces codes et, éventuellement, la manipulation de fils de connexion entre les deux appareils à connecter. Un autre but de la présente invention est donc de réaliser un dispositif dédié à l'appairage sécurisé des appareils d'un réseau radiofréquence qui permet l'appairage automatique de chaque appareil du réseau radiofréquence au fur et à mesure des besoins de connexion.

L'invention concerne donc un dispositif d'appairage sécurisé et automatique des appareils d'un réseau informatique, caractérisé en ce qu'il comprend : radiofréquence au fur et à mesure des besoins de connexion.

L'invention concerne donc un dispositif d'appairage sécurisé et automatique des appareils d'un réseau informatique, comprenant:
- un module de connexion pour communiquer avec chacun des appareils dudit réseau radiofréquence, et
- un module électronique d'appairage permettant de fournir à un appareil du réseau une clé d'appairage pour communiquer avec au moins un autre appareil du réseau radiofréquence.

Le module de connexion comprend des moyens pour limiter la portée d'émission/réception du dispositif et le module électronique d'appairage comprend :
- au moins une mémoire pour enregistrer au moins un code ou clé de chiffrement aux appareils à appairer, et
- un circuit de commande de la mémoire pour réaliser une procédure automatique de connexion et fournir à un appareil du réseau une clé d'appairage.

Le dispositif selon l'invention peut comprendre, en outre, une interface Homme/Machine qui comprend au moins une touche de commande Marche/Arrêt.

Cette interface peut comprendre, en outre, un écran d'affichage pour visualiser, notamment, des informations de fonctionnement du dispositif.

La mémoire peut être prévue pour enregistrer les différentes clés d'appairage aux appareils à appairer. Les clés d'appairage peuvent être fournies par un générateur de clés.

L'invention concerne également un procédé d'appairage sécurisé et automatique des appareils d'un réseau radiofréquence à l'aide du dispositif décrit ci-dessus, caractérisé en ce qu'il comprend les étapes suivantes consistant à :
(a) approcher le dispositif à proximité immédiate (quelques centimètres) de l'appareil à appairer,
(b) activer le dispositif et l'appareil à appairer,
(c) fournir à l'appareil à appairer au moins une clé d'appairage pour être utilisée lors des communications avec au moins un autre appareil du réseau, et
(d) retourner à l'étape (a) pour un autre appareil à appairer.

D'autres caractéristiques et avantages de la présente invention apparaîtront à la lecture de la description suivante d'un exemple particulier de réalisation, ladite description étant faite en relation avec les dessins joints dans lesquels :
- la figure 1 montre schématiquement un réseau radiofréquence qui connecte plusieurs appareils entre eux, et
- la figure 2 est un schéma fonctionnel simplifié d'un dispositif selon l'invention,

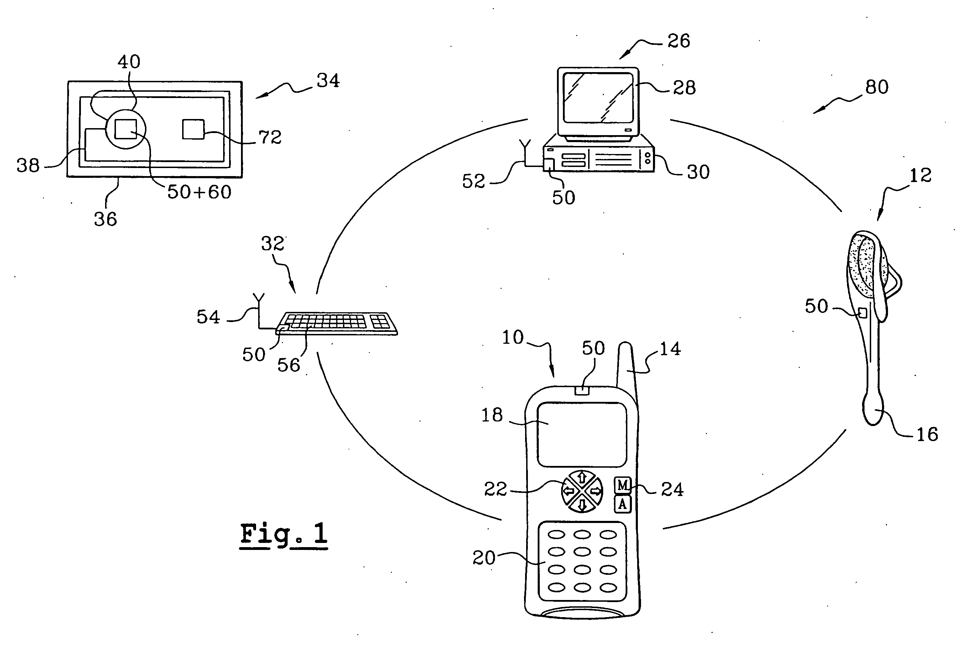

L'invention sera décrite dans son application à un réseau radiofréquence 80 (figure 1) réalisé et fonctionnant selon les spécifications du système précité BLUETOOTH. Ce réseau 60 est par exemple prévu pour connecter un appareil téléphonique portable 10 à une oreillette d'écoute 12 et à un ordinateur personnel 26, ce dernier étant connecté via le réseau 60 à un clavier 32.

A cet effet, les différents appareils 10, 12, 26 et 32 sont équipés d'un module BLUETOOTH 50 qui' émet et reçoit des signaux radioélectriques via une antenne 14 pour l'appareil téléphonique portable, 16 pour l'oreillette, 52 pour l'ordinateur personnel, 26 et 54, pour le clavier 32.

Dans l'état actuel du système BLUETOOTH, la connexion d'un appareil au réseau doit être effectuée selon un processus particulier qui implique des manipulations par l'utilisateur de l'appareil concerné, par exemple, en entrant un code d'accès par les touches 56 du clavier 32 ou les touches 20 de l'appareil téléphonique portable 10. D'autres touches de Marche/Arrêt 24 et de "navigation" 22 sur un écran 18 peuvent être aussi utilisées.

En l'absence de touches, sur l'appareil à connecter, il est prévu des connexions filaires, par exemple pour appairer l'oreillette 12 à l'appareil téléphonique portable 10 ou pour appairer le clavier 32 à l'ordinateur personnel 26.

C'est pendant le processus de connexion ou d'appairage au réseau que les appareils susceptibles de communiquer entre eux s'échangent des clés de reconnaissance ou d'appairage qui sont ensuite utilisées pour effectuer ultérieurement des communications de manière sécurisée. Dans la demande de brevet précitée, il a été décrit un procédé pour sécuriser ce processus de connexion ou d'appairage entre deux appareils du réseau, par exemple entre l'oreillette 12 et l'appareil téléphonique portable 10.

L'invention propose un dispositif pour appairer de manière automatique et sécurisée chaque appareil au réseau de sorte que chaque appareil peut ensuite se connecter à un autre ou plusieurs autres appareils du réseau.

Selon l'invention, ce dispositif peut se présenter sous la forme d'une carte à puce électronique sans contact 34 ou sous toute autre forme.

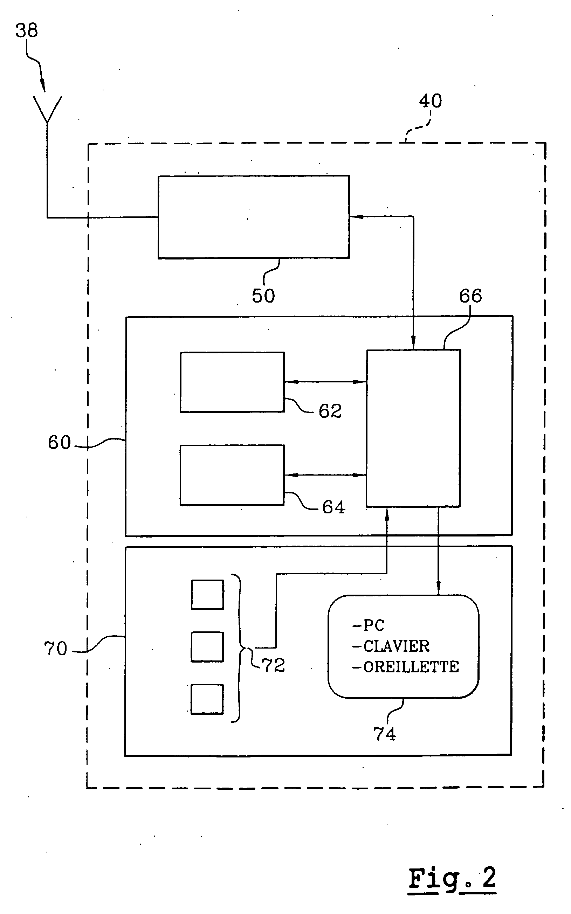

Quelle que soit sa forme extérieure, ce dispositif comprend essentiellement (figures 1 et 2) :
- un module BLUETOOTH 50 associé à une antenne 38, qui comprend essentiellement des moyens d'émission/réception fonctionnant suivant les spécifications des normes précitées, et
- un module électronique d'appairage 60.

Le module BLUETOOTH peut être remplacé par un module de communication à distance équivalent tels que ceux fonctionnant par faisceau infra-rouge, par couplage magnétique ou capacitif.

Il peut également comprendre :
- une interface homme/machine 70 qui peut ou non comprendre :

- une ou plusieurs touches de commande 72,
- et/ou un écran de visualisation 74.

Le module électronique d'appairage 60 comprend :
- une mémoire 62 pour enregistrer au moins un code ou clé d'appairage,
- un circuit de commande 66 qui fournit des signaux de commande de la mémoire 62 et du module BLUETOOTH 50.

En présence de l'interface homme/machine 70, le circuit de commande reçoit des signaux des touches 72 et fournit des signaux de visualisation pour l'affichage sur l'écran 74.

La mémoire 62 peut être remplacée ou complétée par un générateur de clés 64.

Le module électronique d'appairage 60 est de préférence réalisé par un microcontrôleur et ses mémoires associées mettant en oeuvre des programmes spécifiques, notamment pour effectuer des calculs cryptographiques et contrôler le processus d'appairage.

Le module BLUETOOTH et, plus particulièrement, les moyens d'émission/réception sont calibrés pour avoir un diagramme de rayonnement dont la portée n'est que de quelques centimètres.

Si le dispositif selon l'invention est du type sans contact, l'énergie électrique pour son fonctionnement doit lui être fournie soit par une pile électrique, soit par l'énergie haute fréquence reçue de l'appareil à appairer à l'aide d'un circuit de redressement et filtrage de type classique.

Le dispositif selon l'invention doit être mis en oeuvre selon les étapes suivantes consistant à :
(a) approcher le dispositif 40 à proximité immédiate (quelques centimètres) de l'appareil à appairer 10, 12, 26 ou 32,
(b) activer le dispositif 40 et l'appareil à appairer 10, 12, 26 ou 32,
(c) fournir à l'appareil à appairer 10, 12, 26 ou 32 au moins une clé d'appairage pour être utilisée lors des communications avec un autre appareil du réseau, et
(d) retourner à l'étape (a) pour un autre appareil à appairer.

La procédure de reconnaissance entre le dispositif 40 et l'appareil à appairer consiste essentiellement à comparer des clés fournies par le dispositif 40 et l'appareil à appairer et à déterminer qu'ils sont autorisés à communiquer entre eux en cas de comparaison positive.

Les clés à comparer peuvent être contenues dans la mémoire 62 du dispositif ou dans une mémoire semblable de l'appareil à appairer ; elles peuvent aussi être calculées grâce au générateur de clés 64 ou à un circuit de calcul semblable de l'appareil à appairer. Ces clés d'appairage, qui permettent de reconnaître que l'appareil à appairer est autorisé à être connecté au réseau radiofréquence de l'utilisateur du dispositif 40, sont différentes de la clé qui est utilisée pour sécuriser les communications entre les appareils à appairer (étape(d)). Les étapes (a) et (b) sont effectuées par l'utilisateur du dispositif 40 tandis que les étapes (c) et (d) sont effectuées par le dispositif 40 sous la commande du circuit 66. L'interface Homme/Machine 70 permet à l'utilisateur par les touches 72 d'être l'initiateur de certaines étapes telles que les étapes (a) et (b) ou d'être renseigné, par l'écran 74, sur les étapes effectuées ou en cours, ou sur l'identité de l'appareil à appairer, en cours d'appairage ou déjà appairé.

Cependant, cette interface Homme/Machine peut être réduite à une seule touche de commande pour activer le dispositif 40 (étape (b)), les étapes suivantes étant effectuées automatiquement par le dispositif 40.

Le dispositif 40 est prévu pour initialiser tous les appareils que l'utilisateur est susceptible d'utiliser dans le réseau radiofréquence et, de ce fait, il dispose dans la mémoire 62 de toutes les clés d'appairage affectées à chaque appareil à appairer.

La mémoire 62 peut aussi contenir, outre les clés d'appairage, des paramètres de configuration de l'appareil à appairer qui lui sont transmis lors de son démarrage initial après sa livraison chez l'utilisateur. Ces paramètres ou certains d'entre eux peuvent aussi être retransmis à l'appareil à appairer à chaque mise en réseau selon le procédé de l'invention.

Le dispositif selon l'invention comporte de préférence un jeu de clés pour permettre différents appairages ou un générateur de clés. Ce dispositif peut comprendre également des moyens d'actionnement pour changer de clés à partager entre les différents appareils, tels que touches, clavier ou autres.

Le dispositif réalise un stockage des clés. Lors de son utilisation, il est approché des appareils destinés à communiquer ensemble pour leur fournir une clé commune. Le dispositif comprend aussi des moyens 66 pour gérer les différentes clés, notamment pour les affecter à chaque appareil soit sur intervention de l'utilisateur à l'aide d'un clavier, soit de manière automatique en l'associant à l'identifiant de l'appareil.

Lors de la transmission de la clé, le dispositif peut recevoir de l'appareil ses caractéristiques qui sont mémorisées en les associant avec un identifiant de la clé pour permettre une gestion des clés.

Le dispositif et le procédé selon l'invention présentent les avantages suivants :
- l'appareil à appairer n'a pas besoin d'adaptation particulière telle qu'un lecteur de carte à puce, de fils de connexion, ou de touche de commande particulière pour être connecté au réseau ;
- l'utilisateur du dispositif n'a pas besoin de connaître un ou plusieurs codes d'accès car ils sont contenus dans la mémoire 62 ;
- l'appareil à appairer est configuré selon des caractéristiques enregistrées dans la mémoire 62, donc sans intervention de l'utilisateur, sauf s'il souhaite les modifier ;
- les informations et paramètres personnels de l'utilisateur sont enregistrés dans la mémoire 62 et sont protégés contre toute fraude ;
- l'appairage s'effectue de manière automatique et sécurisée avec une intervention minimale de l'utilisateur.

## Revendications

1. Dispositif d'appairage automatique et sécurisé (40) des appareils d'un réseau radiofréquence, comprenant
- un module de connexion (50, 38) pour communiquer avec chacun des appareils dudit réseau radiofréquence,
- un module électronique d'appairage (60) permettant de fournir à un appareil du réseau (10, 12, 26 ou 32) une clé d'appairage pour communiquer avec au moins un autre appareil du réseau radiofréquence,
**caractérisé en ce que** ledit module de connexion comprend des moyens pour limiter la portée d'émission/réception du dispositif et **en ce que** ledit module électronique d'appairage comprend :
- au moins une mémoire (62) pour enregistrer au moins un code ou clé de chiffrement aux appareils à appairer, et
- un circuit de commande (66) de la mémoire (62) pour réaliser une procédure automatique de connexion et fournir à un appareil du réseau une clé d'appairage.

2. Dispositif selon la revendication 2, **caractérisé en ce que** le module de connexion (50, 38) est du type radiofréquence lui permettant de se connecter audit réseau radiofréquence.

3. Dispositif selon la revendication 1 ou 2, **caractérisé en ce qu'**il comprend, en outre, une interface Homme/Machine (70) comprenant au moins une touche de commande (72) de Marche/Arrêt dudit dispositif.

4. Dispositif selon la revendication 3, **caractérisé en ce que** l'interface Homme/Machine (70) comprend, en outre, un écran d'affichage (74).

5. Dispositif selon l'une des revendications 1 à 4, **caractérisé en ce que** la mémoire (62) est prévue pour enregistrer les différentes clés d'appairage aux appareils à appairer.

6. Dispositif selon l'une des revendications 1 à 5, **caractérisé en ce que** la mémoire (62) est prévue pour enregistrer les différentes caractéristiques de l'appareil récepteur d'une clé d'appairage.

7. Dispositif selon l'une des revendications 1 à 6, **caractérisé en ce que** la mémoire (62) est prévue pour enregistrer les différentes configurations des appareils susceptibles d'être appairés par ledit dispositif.

8. Dispositif selon l'une des revendications 1 à 7, **caractérisé en ce que** la clé de chiffrement est fournie par un générateur de clés de chiffrement.

9. Dispositif selon l'une des revendications 1 à 8, **caractérisé en ce qu'**il comprend des moyens (64, 66) pour changer les clés d'appairage des appareils.

10. Dispositif selon l'une des revendications 1 à 9, **caractérisé en ce qu'**il comprend des moyens (66) pour gérer l'affectation des clés aux divers appareils.

11. Objet portable contenant un dispositif selon l'une quelconque des revendications 1 à 10, **caractérisé en ce qu'**il se présente sous la forme d'une carte à puce électronique.

12. Procédé d'appairage automatique et sécurisé, des appareils d'un réseau radiofréquence à l'aide d'un dispositif ou objet selon l'une des revendications précédentes 1 à 11, **caractérisé en ce qu'**il comprend les étapes suivantes consistant à :
(a) approcher le dispositif (40) à proximité immédiate (quelques centimètres) de l'appareil à appairer (10, 12, 26 ou 32),
(b) activer le dispositif (40) et l'appareil à appairer (10, 12, 26 ou 32),
(c) fournir à l'appareil à appairer (10, 12, 26 ou 32) au moins une clé d'appairage pour être utilisée lors de communications avec au moins un des appareils du réseau, et
(d) retourner à l'étape (a) pour un autre appareil à appairer.

## Claims

1. Automatic, secure system (40) for pairing devices in a radiofrequency network, comprising
- a connection module (50, 38) for communicating with each of the devices in said radiofrequency network,
- an electronic pairing module (60) that can supply a network device (10, 12, 26 or 32) with a pairing key that allows it to communicate with at least one other device in the radiofrequency network,
**characterised in that** said connection module comprises means for limiting the sending/receiving range of the system and **in that** said pairing electronic module comprises:
- at least one memory (62) for storing at least one code or encoding key in the devices to be paired, and
- a memory (62) control circuit (66) for performing an automatic connection procedure and supplying a network device with a pairing key.

2. System according to claim 2, **characterised in that** the connection module (50, 38) uses radiofrequencies in order to connect to said radiofrequency network.

3. System according to claim 1 or 2, **characterised in that** it also comprises a man-machine interface (70) comprising at least one control function key (72) for starting/stopping said system.

4. System according to claim 3, **characterised in that** the man-machine interface (70) also comprises a display device (74).

5. System according to one of the claims from 1 to 4 **characterised in that** the memory (62) is provided for storing the various pairing keys in the devices to be paired.

6. System according to one of the claims from 1 to 5 **characterised in that** the memory (62) is provided for storing the various characteristics of the device that receives a pairing key.

7. System according to one of the claims from 1 to 6 **characterised in that** the memory (62) is provided for storing the various configurations of the devices that can be paired using said system.

8. System according to one of the claims from 1 to 7, **characterised in that** the encoding key is provided by an encoding-key generator.

9. System according to one of the claims from 1 to 8, **characterised in that** it comprises means (64, 66) for changing the pairing keys of the devices.

10. System according to one of the claims from 1 to 9, **characterised in that** it comprises means (66) for managing the allocation of keys to the various devices.

11. Portable object containing a system according to any one of the claims from 1 to 10, **characterised in that** it is presented in the form of a chip card.

12. Automatic, secure method of pairing devices in a radiofrequency network using a system or an object according to one of the preceding claims 1 to 11,
**characterised in that** it comprises the following steps consisting of the following:
(a) bringing the system 40 into the close proximity (several centimetres) of the device to be paired 10, 12, 26 or 32,
(b) activating the system 40 and the device to be paired 10, 12, 26 or 32.
(c) providing the device to be paired 10, 12, 26 or 32 with at least one pairing key to be used during its communication with another device in the network, and
(d) returning to the step (a) for the next device to be paired.

## Patentansprüche

1. Vorrichtung (40) für die gesicherte und automatische Paarung der Geräte eines Funkfrequenznetzes, umfassend:
- ein Anschlussmodul (50, 38) für die Kommunikation mit jedem der Geräte des Funkfrequenznetzes,
- ein elektronisches Paarungsmodul (60), mit dem an ein Gerät (10, 12, 26 oder 32) des Netzes ein Paarungsschlüssel geliefert werden kann, um mit mindestens einem anderen Gerät des Funkfrequenznetzes zu kommunizieren,
**dadurch gekennzeichnet, dass** das Anschlussmodul Mittel umfasst, um die Sende-/Empfangsreichweite der Vorrichtung zu begrenzen, und dass das elektronische Paarungsmodul umfasst:
- mindestens einen Speicher (62) für die Aufzeichnung zumindest eines Verschlüsselungscodes oder -schlüssels für die zu paarenden Geräte, und
- eine Steuerschaltung (66) des Speichers (62), um ein automatisches Anschlussverfahren durchzuführen und einem Gerät des Netzes einen Paarungsschlüssel zu liefern.

2. Vorrichtung nach Anspruch 2, **dadurch gekennzeichnet, dass** das Anschlussmodul (50, 38) des Typs Funkfrequenz ist, was ihm gestattet, sich an das Funkfrequenznetz anzuschließen.

3. Vorrichtung nach Anspruch 1 oder 2, **dadurch gekennzeichnet, dass** sie ferner eine Mensch-/Maschine-Schnittstelle (70) umfasst, die mindestens eine Ein-/Aus-Bedienungstaste (72) der Vorrichtung aufweist.

4. Vorrichtung nach Anspruch 3, **dadurch gekennzeichnet, dass** die Mensch-/Maschine-Schnittstelle (70) ferner ein Display (74) aufweist.

5. Vorrichtung nach einem der Ansprüche 1 bis 4, **dadurch gekennzeichnet, dass** der Speicher (62) vorgesehen ist, um die verschiedenen Paarungsschlüssel für die zu paarenden Geräte aufzuzeichnen.

6. Vorrichtung nach einem der Ansprüche 1 bis 5, **dadurch gekennzeichnet, dass** der Speicher (62) vorgesehen ist, um die einzelnen Merkmale des Empfangsgeräts eines Paarungsschlüssels aufzuzeichnen.

7. Vorrichtung nach einem der Ansprüche 1 bis 6, **dadurch gekennzeichnet, dass** der Speicher (62) vorgesehen ist, um die einzelnen Konfigurationen der Geräte aufzuzeichnen, die anhand der Vorrichtung gepaart werden können.

8. Vorrichtung nach einem der Ansprüche 1 bis 7, **dadurch gekennzeichnet, dass** der Verschlüsselungsschlüssel von einem Verschlüsselungsschlüsselgenerator geliefert wird.

9. Vorrichtung nach einem der Ansprüche 1 bis 8, **dadurch gekennzeichnet, dass** sie Mittel (64, 66) umfasst, um die Paarungsschlüssel der Geräte zu ändern.

10. Vorrichtung nach einem der Ansprüche 1 bis 9, **dadurch gekennzeichnet, dass** sie Mittel (66) umfasst, um die Zuordnung der Schüssel zu den diversen Geräten zu verwalten.

11. Tragbares Objekt, das eine Vorrichtung nach einem der Ansprüche 1 bis 10 enthält, **dadurch gekennzeichnet, dass** es sich um eine elektronische Chipkarte handelt.

12. Verfahren für die gesicherte und automatische Paarung von Geräten eines Funkfrequenznetzes anhand einer Vorrichtung oder eines Objekts nach einem der vorangehenden Ansprüche 1 bis 11, **dadurch gekennzeichnet, dass** es die folgenden Schritte umfasst:
(a) Annähern der Vorrichtung (40) in unmittelbarer Nähe (einige Zentimeter) des zu paarenden Geräts (10, 12, 26 oder 32),
(b) Einschalten der Vorrichtung (40) und des zu paarenden Geräts (10, 12, 26 oder 32),
(c) Lieferung an das zu paarende Gerät (10, 12, 26 oder 32) mindestens eines Paarungsschlüssels, der bei Kommunikationen mit mindestens einem anderen Gerät des Netzes benutzt wird, und
(d) Rückkehr zum Schritt (a) für ein anderes zu paarendes Gerät.
